(19) Europäisches Patentamt
European Patent Office
Office européen des brevets

(11) **EP 0 875 742 B1**

(12) **EUROPÄISCHE PATENTSCHRIFT**

(45) Veröffentlichungstag und Bekanntmachung des Hinweises auf die Patenterteilung:
**19.12.2007   Patentblatt 2007/51**

(21) Anmeldenummer: **97107155.0**

(22) Anmeldetag: **30.04.1997**

(51) Int Cl.:
***G01F 23/296*** *(2006.01)*

(54) **Vorrichtung zur Feststellung und/oder Überwachung eines vorbestimmten Füllstands in einem Behälter**

Device for determining/monitoring of a predefined liquid level in a container

Dispositif pour la détermination et/ou la surveillance d'un niveau prédéterminé dans un réservoir

(84) Benannte Vertragsstaaten:
**DE FR GB IT**

(43) Veröffentlichungstag der Anmeldung:
**04.11.1998   Patentblatt 1998/45**

(73) Patentinhaber: **Endress + Hauser GmbH + Co. KG**
**79689 Maulburg (DE)**

(72) Erfinder:
• **Getman, Igor, Prof.**
**79540 Lörrach (DE)**
• **Lopatin, Sergej, Dr.**
**79539 Lörrach (DE)**
• **Dreyer, Volker**
**79541 Lörrach (DE)**

(56) Entgegenhaltungen:
DE-A- 4 419 617          DE-C- 4 402 234
DE-C- 4 439 879

• **PATENT ABSTRACTS OF JAPAN vol. 012, no. 205 (P-716), 14.Juni 1988 & JP 63 008582 A (MATSUSHITA ELECTRIC IND CO LTD), 14.Januar 1988,**

**Beschreibung**

Die Erfindung betrifft eine Vorrichtung zur Feststellung und/oder Überwachung eines vorbestimmten Füllstandes in einem Behälter, welche Vorrichtung umfaßt:

- ein auf der Höhe des vorbestimmten Füllstandes angebrachtes mechanisches Schwingungsgebilde,
- einen elektromechanischen Wandler,

    -- der mindestens einen Sender aufweist,

        --- an dem ein elektrisches Sendesignal anliegt und
        --- der das mechanische Schwingungsgebilde zu Schwingungen anregt, und

    -- der einen Empfänger aufweist,

        --- der die mechanischen Schwingungen des Schwingungsbildes aufnimmt und in ein elektrisches Empfangssignal umwandelt,

- eine Auswerteeinheit,

    -- die das Empfangssignal aufnimmt und dessen Frequenz bestimmt, dieses mit einer Referenzfrequenz vergleicht und ein Ausgangssignal erzeugt das angibt, daß das mechanische Schwingungsgebilde von einem Füllgut bedeckt ist, wenn die Frequenz einen Wert aufweist der kleiner als die Referenzfrequenz ist, und daß es nicht bedeckt ist, wenn der Wert größer ist, und

- einen Regelkreis, der eine zwischen dem elektrischen Sendesignal und dem elektrischen Empfangssignal bestehende Phasendifferenz auf einen bestimmten konstanten Wert regelt, bei dem das Schwingungsgebilde Schwingungen mit einer Resonanzfrequenz ausführt und der einen Abschnitt mit einen verstärker und einem Phasenschieber aufweist.

Derartige Füllstandsgrenzschalter werden in vielen Industriezweigen, insb. in der Chemie und in der Lebensmittelindustrie eingesetzt. Sie dienen zur Grenzstandsdetektion und werden z.B. als Überfüllsicherung oder als Pumpenleerlaufschutz verwendet.

In der DE-A 44 19 617 ist eine Vorrichtung zur Feststellung und/oder Überwachung eines vorbestimmten Füllstandes in einem Behälter beschrieben. Diese umfaßt:

- ein auf der Höhe des vorbestimmten Füllstandes angebrachtes mechanisches Schwingungsgebilde,
- einen elektromechanischen Wandler,

    -- der mindestens einen Sender aufweist,

        --- an dem ein elektrisches Sendesignal anliegt und
        --- der das mechanische Schwingungsgebilde zu Schwingungen anregt, und

    -- der einen Empfänger aufweist,

        --- der die mechanischen Schwingungen des Schwingungsbildes aufnimmt und in ein elektrisches Empfangssignal umwandelt,

- eine Auswerteeinheit,

    -- die das Empfangssignal aufnimmt und dessen Frequenz bestimmt, dieses mit einer Referenzfrequenz vergleicht und ein Ausgangssignal erzeugt das angibt, daß das mechanische Schwingungsgebilde von einem Füllgut bedeckt ist, wenn die Frequenz einen Wert aufweist der kleiner als die Referenzfrequenz ist, und daß es nicht bedeckt ist, wenn der Wert größer ist, und

- einen Regelkreis, der eine zwischen dem elektrischen Sendesignal und dem elektrischen Empfangssignal bestehende Phasendifferenz auf einen bestimmten konstanten Wert regelt, bei dem das Schwingungsgebilde Schwingungen mit einer Resonanzfrequenz ausführt und der einen Abschnitt mit einem Verstärker und einem Phasenschieber aufweist.

Der Regelkreis wird z.B. dadurch gebildet, daß das Empfangssignal verstärkt und über einen Phasenschieber auf das Sendesignal zurück gekoppelt wird.

Bisher war es nicht möglich derartige Vorrichtungen auch für Messungen in hochviskosen Medien oder in wasserhaltigen oder zähen Schäumen einzusetzen, da bei diesen Anwendungen eine zuverlässige Anregung des mechanischen Schwingungsgebildes zu Schwingungen bei der Resonanzfrequenz nicht gewährleistet ist.

Erste Untersuchungen, die zu der nachfolgend beschriebenen Erfindung geführt haben, haben gezeigt, daß die Ursache hierfür darin besteht, daß es sich bei der beschriebenen Vorrichtung um ein komplexes Schwingungssystem handelt, das sich aus dem mechanischen Schwingungsgebilde, dem elektromechanischen Wandler und dem Regelkreis zusammensetzt. Die einzelnen Komponenten sind nicht vollständig elektrisch und mechanisch voneinander getrennt. Es treten sowohl elektrische als auch mechanische Kopplungen auf.

Der feste Wert der Phasendifferenz entspricht der Resonanz des Systems wenn das Schwingungsgebilde in Gasen oder in Flüssigkeiten schwingt. Reduziert sich die Schwingungsgüte der Vorrichtung jedoch aus irgendeinem Grund, so hat dies zur Folge, daß der feste Wert der Phasendifferenz nicht mehr existiert. Es gibt keine Frequenz bei der das mechanische Schwingungsgebilde Schwingungen mit einer von null verschiedenen Amplitude ausführt und die Phasendifferenz den festen Wert aufweist. Diese Phasendifferenz kann durch den Regelkreis nicht eingestellt werden. Es tritt somit eine Fehlfunktion auf.

Eine Reduktion der Schwingungsgüte tritt z.B. dann auf, wenn die Bewegung des mechanischen Schwingungsgebildes gedämpft wird, z.B. indem es in ein viskoses Medium oder in flüssigkeitshaltigen oder zähen Schaum eingetaucht ist. Weiterhin wird die Schwingungsgüte reduziert durch Energieverluste innerhalb der Vorrichtung, z.B. bedingt durch Materialermüdungen oder durch Asymmetrien, z.B. aufgrund asymmetrischer Ansatzbildung, die zu asymmetrischen Rückstellkräften führen. Prinzipiell führt jede Art des Energieverlustes, sei es an ein Füllgut abgegebene Schwingungsenergie oder über eine Befestigung der Vorrichtung an den Behälter abgegebene Energie, zu einer Reduktion der Schwingungsgüte.

Es ist eine Aufgabe der Erfindung, eine Vorrichtung der eingangs genannten Art anzugeben, bei der zwischen dem Sendesignal und dem Empfangssignal bei der Resonanzfrequenz des mechanischen Schwingungsgebildes eine feste Phasendifferenz besteht, die unabhängig Schwingungsgüte der Vorrichtung ist.

Dies wird erfindungsgemäß gelöst, indem eine das Empfangssignal übertragende Empfangssignalleitung mit einer das Sendesignal übertragenden Sendesignalleitung über eine elektrische Impedanz verbunden ist, welche parallel zu dem den Verstärker und den Phasenschieber aufweisenden Abschnitt des Reseikreises angeordnet ist.

Gemäß einer Ausgestaltung der Erfindung weist das Empfangssignal drei Komponenten auf, nämlich

- ein Meßsignal, das durch die Schwingung des mechanischen Schwingungsgebildes bedingt ist,
- ein erstes zusätzliches Signal, das durch eine elektrische Kopplung zwischen dem Sender und dem Empfänger bedingt ist, und
- ein zweites zusätzliches Signal, das durch eine mechanische Kopplung zwischen dem Sender und dem Empfänger bedingt ist, und
- die Impedanz ist so bestimmt, daß das erste und das zweite zusätzliche Signal nahezu gleich große Amplituden aufweisen und nahezu gegenphasig verlaufen.

Gemäß einer weiteren Ausgestaltung sind die Sender 23 und der Empfänger 24 piezoelektrische Elemente.

Gemäß einer weiteren Ausgestaltung nimmt die Phasendifferenz zwischen dem Sendesignal und dem Empfangssignal Werte zwischen 20° und 90° oder zwischen - 90° und -20° bezogen auf einen Bezugswert an.

Gemäß einer weiteren Ausgestaltung ist die Impedanz eine Kapazität.

Gemäß einer Ausgestaltung der Erfindung ist die Impedanz ein Widerstand, eine Induktivität oder eine Kombination aus mindestens einem Widerstand und/oder mindestens einer Induktivität und/oder mindestens einer Kapazität.

Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.

Fig. 1 zeigt      einen Längsschnitt durch ein mechanisches Schwingungsgebilde und einen elektromechanischen Wandler;

Fig. 2 zeigt      eine schematische Darstellung des Wandlers von Fig. 1 und eine daran angeschlossene Schaltung;

Fig. 3a zeigt      die Amplitude des Meßsignals in Abhängigkeit von der Frequenz bei hoher und bei niedriger Schwingungsgüte;

Fig. 3b zeigt      die Phase des Meßsignals in Abhängigkeit von der Frequenz bei hoher und bei niedriger Schwingungsgüte;

Fig. 4a zeigt      die Amplitude eines ersten zusätzlichen Signals in Abhängigkeit von der Frequenz;

Fig. 4b zeigt      die Phase des ersten zusätzlichen Signals in Abhängigkeit von der Frequenz;

Fig. 5a zeigt      die Amplitude eines zweiten zusätzlichen Signals in Abhängigkeit von der Frequenz mit und ohne zusätzliche elektrische Kopplung;

Fig. 5b zeigt      die Phase des zweiten zusätzlichen Signals in Abhängigkeit von der Frequenz;

Fig. 6a zeigt      die Amplitude des Empfangssignals in Abhängigkeit von der Frequenz bei hoher und bei niedriger Schwingungsgüte;

Fig. 6b zeigt      die Phase des Empfangssignals in Abhängigkeit von der Frequenz bei hoher und bei niedriger Schwingungsgüte;

Fig. 7a zeigt      die Amplitude des Empfangssignals in Abhängigkeit von der Frequenz bei hoher und bei niedriger Schwingungsgüte mit zusätzlicher elektrischer Kopplung;

Fig. 7b zeigt      die Phase des Empfangssignals in Abhängigkeit von der Frequenz bei hoher und bei niedriger Schwingungsgüte mit zusätzlicher elektrischer Kopplung;

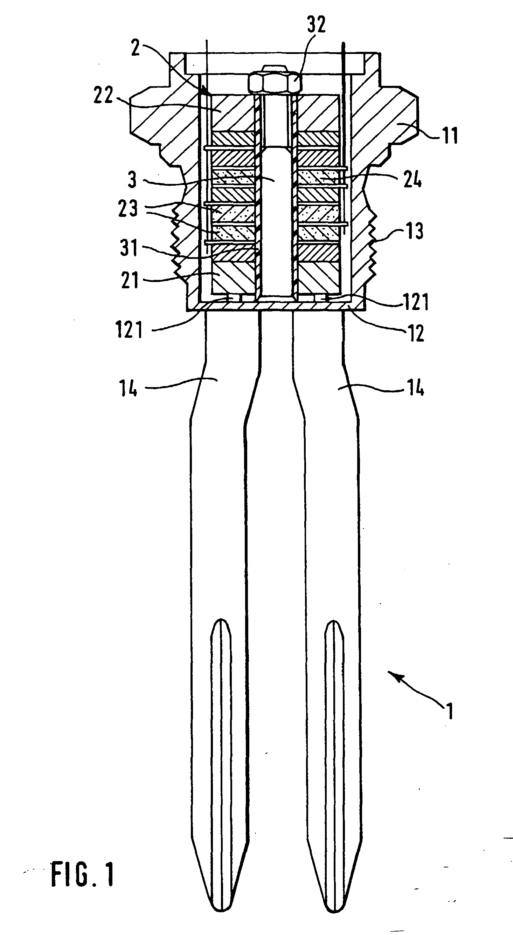

In Fig. 1 zeigt einen Längsschnitt durch ein Ausführungsbeispiel eines mechanischen Schwingungsgebildes 1. Es weist ein im wesentlichen zylindrisches Gehäuse 11 auf, das von einer kreisförmigen Membran 12 frontbündig abgeschlossen ist. An das Gehäuse 11 ist ein Gewinde 13 angeformt, mittels dessen die Vorrichtung in eine nicht dargestellte auf der Höhe des vorbestimmten Füllstands angeordnete Öffnung in einem Behälter einschraubbar ist. Andere dem Fachmann bekannte Befestigungsweisen, z.B. mittels an dem Gehäuse 11 angeformter Flansche, sind ebenfalls einsetzbar.

An der Außenseite des Gehäuses 11 sind an der Membran 12 zwei in den Behälter weisende Schwingstäbe 14 angeformt. Diese werden durch einen im Inneren des Gehäuses 11 angeordneten elektromechanischen Wandler 2 in Schwingungen senkrecht zu deren Längsachse versetzt.

Die Erfindung ist jedoch nicht auf mechanische Schwingungssysteme mit zwei Schwingstäben beschränkt; sie kann auch bei Grenzschaltern eingesetzt werden, die nur einen oder keine Schwingstäbe aufweisen. Bei den letztgenannten kommt z.B. nur die schwingende Membran mit einem in dem Behälter befindlichen Füllgut in Kontakt.

Der Wandler 2 weist drei in einem Stapel angeordnete ringförmige piezoelektrische Elemente, auf. An beiden Enden des Stapels ist jeweils ein Metallring 21, 22 angeordnet. Der membran-zugewandte Metallring 21 liegt auf Druckzapfen 121 auf, die an einer äußeren Ringfläche der Membran 12 angeformt sind. In der Mitte der Membran 12 ist eine in das Innere des Gehäuses 11 weisende Spannschraube 3 vorgesehen. Diese ist mit einer Isolation 31 versehen und führt durch den Wandler 2 hindurch. Auf dem membran-abgewandten Ende der Spannschraube 3 ist eine Mutter 32 aufgeschraubt. Diese liegt auf dem membran-abgewandten Metallring 22 auf. Die Mutter 32 ist angezogen. Die Membran 12 ist somit vorgespannt.

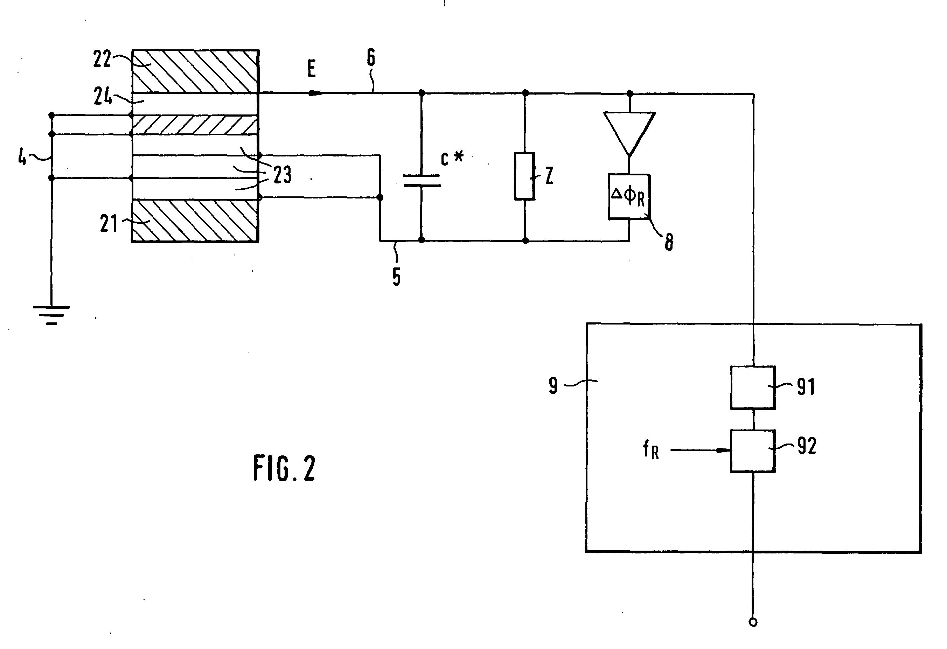

Die beiden membran-zugewandten piezoelektrischen Elemente arbeiten als Sender 23 und das membran-abgewandte piezoelektrisches Element, dient als Empfänger 24. Fig. 2 zeigt eine schematische Darstellung des Wandlers 2 und eine daran angeschlossene elektrische Schaltung. Jeder der Sender 23 und der Empfänger 24 weist zwei jeweils auf deren Ringflächen angeordnete Elektroden auf, von denen jeweils eine erste über jeweils eine Leitung 4 mit einem Bezugspotential, z.B. Erde, verbunden ist. Die jeweilige zweite Elektrode der Sender 23 ist jeweils mit einer Sendesignalleitung 5 verbunden. Die zweite Elektrode des Empfängers 24 ist mit einer Empfangssignalleitung 6 verbunden.

Die piezoelektrischen Elemente, also die Sender 23 und der Empfänger 24 sind jeweils parallel zur Längsachse des Stapels polarisiert. Liegt an der Sendesignalleitung 5 eine Wechselspannung, so führen die Sender 23 Dickenoszillationen aus. Entsprechend oszilliert die Höhe des Stapels. Da dieser durch die Spannschraube 3, die Mutter 32 und die Druckzapfen 121 eingespannt und mit der Membran 12 gekoppelt ist, wird die Membran 12 durch diese Dickenoszillationen zu Biegeschwingungen angeregt. Die Schwingstäbe 14 sind endseitig fest mit der Membran 12 verbunden. Biegeschwingungen der Membran 12 versetzten die Schwingstäben 14 folglich in Schwingungen senkrecht zu deren Längsachse.

Entsprechend führt eine Schwingung der Schwingstäbe 14 zu einer Biegeschwingung der Membran 12, die wiederum eine Dickenoszillation des Stapel bewirkt. Diese Dickenoszillation führt zu einer Veränderung der über den Empfänger 24 abfallenden Spannung. Ein entsprechendes Empfangssignal E steht über die Empfangssignalleitung 6 zur Verfügung.

Die Amplitude A dieses elektrischen Empfangssignals E ist um so größer, je größer die mechanische Schwingungsamplitude der Schwingstäbe 14 ist. In Ausnutzung dieser Tatsache wird die Vorrichtung vorzugsweise bei deren Resonanzfrequenz $f_r$ betrieben. Bei der Resonanzfrequenz $f_r$ ist die mechanische Schwingungsamplitude maximal.

Betrachtet man einen harmonischen Oszillator als Beispiel für ein ideales Schwingungssystem, so weist dessen Schwingungsamplitude ein einziges Maximum in Abhängigkeit von der Schwingungsfrequenz auf. Die Phasendifferenz zwischen der Schwingungsanregung und der Schwingung des Oszillators erfährt im Bereich dieses Maximums einen Phasensprung von 180°. Bei der Resonanzfrequenz ist die Schwingungsamplitude maximal und die Phasendifferenz beträgt 90°.

Basierend auf dem gleichen physikalischen Grundprinzip besteht auch bei der vorliegenden Vorrichtung im Resonanzfall eine feste Phasenbeziehung zwischen dem Sendesignal und dem Empfangssignal E. Der feste Wert der Phasendifferenz ist abhängig von der Polarisation der Sender 23 und des Empfängers 24 und von den mechanischen und elektrischen Schwingungseigenschaften der Vorrichtung. Messungen haben gezeigt, daß die Werte in der Regel zwischen 20° und 90° bzw. zwischen -90° und -20° bezogen auf einen Bezugspunkt, z.B. 0° oder 180°, liegen.

Damit das mechanische Schwingungsgebilde in Schwingungen bei dessen Resonanzfrequenz $f_r$ versetzt wird, ist ein Regelkreis vorgesehen, der die zwischen dem elektrischen Sendesignal und dem elektrischen Empfangssignal E bestehende Phasendifferenz auf einen bestimmten konstanten Wert $\Delta\varphi_R$ regelt. Ein Ausführungsbeispiel eines derartigen Regelkreises ist in Fig. 2 dargestellt. Dort ist das Empfangssignal E über einen Verstärker 7 und einen Phasenschieber 8, der dessen Phase um den bestimmten konstanten Wert $\Delta\phi_R$ verschiebt, auf das Sendesignal zurückgekoppelt. Der Verstärker 7 ist so zu dimensionieren, daß die Selbsterregungsbedingung erfüllt ist. Dasmechanische Schwingungsgebilde wird folglich über den Wandler 2 zu Schwingungen mit dessen Resonanzfrequenz angeregt. Ist das Schwingungsgebilde von dem Füllgut bedeckt, so hat die Resonanzfrequenz $f_r$ einen geringeren Wert, als wenn das Schwingungsgebilde frei schwingt. Der feste Wert der Phasendifferenz, der bei der Resonanzfrequenz $f_r$ angenommen wird, ist dagegen unabhängig davon, ob das Schwingungsgebilde von dem Füllgut bedeckt ist oder nicht.

Das Empfangssignal E liegt über die Empfangssignalleitung 6 am Eingang einer Auswerteeinheit 9 an. Mittels einer Frequenzmeßschaltung 91 wird dessen Frequenz bestimmt und das Ergebnis einem Komparator 92 zugeführt. Dieser vergleicht die gemessene Frequenz mit einer in einem Speicher abgelegten Referenzfrequenz $f_R$. Ist die gemessene Frequenz kleiner als die Referenzfrequenz $f_R$ gibt die Auswerteeinheit 9 ein Ausgangssignal ab, das angibt, daß das mechanische Schwingungsgebilde von einem Füllgut bedeckt ist. Weist die Frequenz einen Wert auf der größer als die Referenzfrequenz $f_R$ ist, so gibt die Auswerteeinheit 9 ein Ausgangssignal ab, das angibt, daß das mechanische Schwingungsgebilde nicht vom Füllgut bedeckt ist. Das Ausgangssignal ist z.B. eine Spannung, die einen entsprechenden Wert annimmt oder ein Strom, der einen entsprechenden Wert aufweist oder dem ein Signalstrom in Form von Pulsen mit einer entsprechenden Frequenz oder einer entsprechenden Dauer überlagert ist.

Bei einem harmonischen Oszillator bewirkt eine Dämpfung oder eine Reduktion der Schwingungsgüte eine Reduktion der maximalen Amplitude im Resonanzfall. Die Phase steigt in einem solchen Fall in Abhängigkeit von der Frequenz nicht sprunghaft sondern kontinuierlich an und zwar um so langsamer, je größer die Dämpfung bzw. die Reduktion der Schwingungsgüte ist. Insgesamt erfolgt jedoch auch bei sehr großer Dämpfung eine Phasenänderung von insgesamt 180° und bei der Resonanzfrequenz besteht eine Phasendifferenz von 90°. Der feste der Resonanz entsprechende Wert der Phasendifferenz von 90° existiert immer und wird bei der Resonanzfrequenz angenommen.

Im Unterschied zu einem idealen Oszillator bestehen bei der oben genannten Vorrichtung Kopplungen elektrischer und mechanischer Art zwischen den Sendern 23, dem Empfänger 24 und dem mechanischen Schwingungsgebilde. Die mechanische Kopplung ist im wesentlichen durch die mechanische Einspannung des Wandlers 2 bedingt. So führt z.B. ein den Sender 23 anregendes Sendesignal auch dann zu einem Empfangssignal E, wenn die Schwingstäbe 14 eingespannt sind und folglich keine Bewegung ausführen.

Die elektrische Kopplung besteht zwischen den Sendern 23 und dem Empfänger 24. Diese sind nicht elektrisch unabhängig voneinander, sondern es besteht eine, in der Regel kapazitive, Verbindung zwischen ihnen. Diese Verbindung ist in Fig. 2 in Form eines Ersatzschaltbildes durch die zwischen der Sendesignalleitung 5 und der Empfangssignalleitung eingefügte Kapazität C* dargestellt.

Das Empfangssignal E setzt sich somit aus drei Komponenten zusammen, nämlich einem Meßsignal $E_M$, einem ersten durch die mechanische Kopplung bedingten zusätzlichen Signal $E_{mech}$ und einem durch die elektrische Kopplung bedingten zweiten zusätzlichen Signal $E_{el}$.

$$E = E_M + E_{mech} + E_{el}$$

Das Meßsignal $E_M$ beruht auf der Schwingung des mechanischen Schwingungsgebildes und weist eine frequenzabhängige Amplitude $A_M(f)$ und eine frequenzabhängige Phase $\Delta\varphi_M(f)$ auf. Mit Phase ist hier jeweils der Phasenversatz bezeichnet, den die jeweilige Komponente des elektrischen Empfangssignals E bezogen auf das elektrische Sendesignal aufweist.

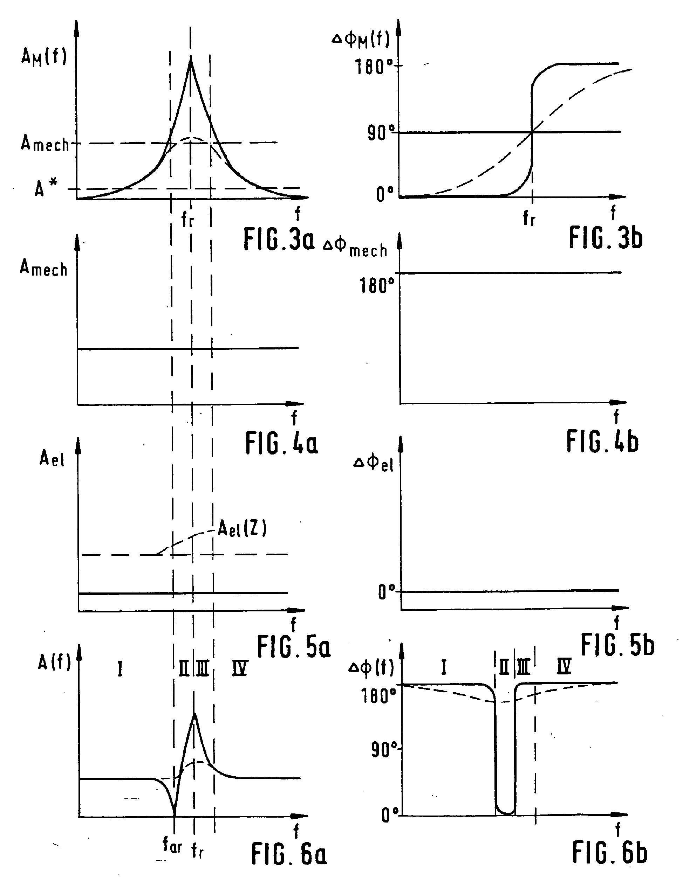

Fig. 3a zeigt die Amplitude $A_M(f)$ und Fig. 3b die Phase $\Delta\varphi_M(f)$ des Meßsignals $E_M$ in Abhängigkeit von der Frequenz f. Die Kurven können rechnerisch durch Simulationsrechnungen, z.B. durch Finite-Elemente-Rechnungen bestimmt werden.

Experimentell können sie ausgemessen werden, indem die Sendesignalleitung 5 an einen Frequenzgenerator angeschlossen wird und Phase und Amplitude der Schwingung der Schwingstäbe 14 in Abhängigkeit von der Frequenz des Frequenzgenerators, z. B. mit einem Laservibrometer, bestimmt werden.

In beiden Figuren entspricht jeweils die durchgezogene Linie einer Vorrichtung mit hoher Schwingungsgüte und die gestrichelte Linie einer Vorrichtung mit niedriger Schwingungsgüte. Sowohl die Amplitude $A_M(f)$ als auch die Phase $\Delta\phi_M(f)$ des Meßsignals weisen in beiden Fällen den für einen harmonischen Oszillator typischen vorgehend bereits beschriebenen Verlauf auf.

Die beiden zusätzlichen Signale $E_{mech}$, $E_{el}$ weisen beide eine im wesentlichen konstante Amplitude $A_{mech}$, $A_{el}$ und eine im wesentlichen konstante Phase $\Delta\phi_{mech}$, $\Delta\phi_{el}$ auf. Mit Phase ist auch hier die Phasenversatz der jeweiligen Komponente des elektrischen Empfangssignals E bezogen auf das elektrische Sendesignal bezeichnet.

Fig. 4a zeigt die Amplitude $A_{mech}$ und Fig. 4b die Phase $\Delta\phi_{mech}$ des ersten zusätzlichen Signals $E_{mech}$ in Abhängigkeit von der Frequenz f. Die Kurven können rechnerisch durch Simulationsrechnungen, z.B. durch Finite-Elemente-Rechnungen bestimmt werden. Experimentell sind sie meßbar wenn die beiden anderen Signalkomponenten, nämlich das Meßsignal $E_M$ und das zweite zusätzliche Signal $E_{el}$ unterbunden sind. Weisen deren Amplituden einen Wert von nahezu Null auf, so ist das Empfangssignal E gleich dem ersten zusätzlichen Signal $E_{mech}$ und kann z.B. mittels eines Oszilloskops ausgemessen werden.

Das Meßsignal $E_M$ kann dadurch ausgeschaltet werden, daß die Schwingstäbe 14 mechanisch fest eingespannt sind. Das zweite zusätzliche Signal $E_{el}$ ist vermeidbar durch eine elektrische Isolation des Empfängers 24, z.B. in Form eines geerdeten metallischen Schirms. Auch empfiehlt es sich hier nach Möglichkeit kurze Leitungen zu verwenden, um Einkopplungen von elektrischen Signalen jeglicher Art gering zu halten.

Die durchgezogene Linie in Fig. 5a zeigt die Amplitude $A_{el}$ und die durchgezogene Linie in Fig. 5b die Phase $\Delta\varphi_{el}$ des zweiten zusätzlichen Signals $E_{el}$ in Abhängigkeit von der Frequenz f. Auch diese Kurven können durch Simulationsrechnungen ermittelt werden. Experimentell können sie aufgenommen werden indem z. B. nichtpolarisierte piezoelektrische Elemente als Sender 23 und als Empfänger 24 eingesetzt werden. Bei diesen wird durch ein Sendesignal keinerlei mechanische Bewegung erzeugt und das Empfangssignal E entspricht folglich dem auf elektrischer Kopplung beruhenden zweiten zusätzlichen Signal $E_{el}$. Dieses kann ebenfalls mittels eines Oszilloskops ausgemessen werden.

Die Amplituden $A_{mech}$, $A_{el}$ und die Phasen $\Delta\phi_{mech}$, $\Delta\phi_{el}$ der zusätzlichen Signale $E_{mech}$, $E_{el}$ sind nahezu frequenzunabhängig und stehen in eindeutigem Zusammenhang zu dem mechanischen Aufbau der jeweiligen Vorrichtung und den elektrischen und mechanischen Eigenschaften der Sender 23 und der Empfänger 24. Typischerweise ist die Amplitude $A_{mech}$ deutlich größer als die Amplitude $A_{el}$. Die Phasen $\Delta\phi_{mech}$, $\Delta\phi_{el}$ sind typischerweise nahezu gleich oder nahezu um 180° versetzt zueinander. Der letztere Fall ist in Fig. 4b und Fig. 5b dargestellt. Weisen diese beiden zusätzlichen Signale über den Frequenzbereich die gleiche Phase auf, so sind entweder die Anschlüsse der Elektroden des Empfängers 24a zu vertauschen oder die Polarisation desselben ist um 180° zu drehen. Letzteres ist z.B. durch das Umdrehen des piezoelektrischen Elements erreichbar. Damit weisen die beiden zusätzlichen Signale die gewünschte entgegengesetzte, d.h. um 180° zueinander versetzte Phase auf. Das gleiche Ergebnis wird selbstverständlich erzielt, indem die Sender 23 entsprechend manipuliert werden. In der Praxis kann es auch vorkommen, daß die Phasen $\Delta\phi_{mech}$ $\Delta\phi_{el}$ sich um einen von 0° oder 180° deutlich verschiedenen Betrag unterscheiden. Das Nachfolgende gilt dann analog. Es wird bei diesem Ausführungsbeispiel ein Unterschied von 180° gewählt, da die prinzipiellen Zusammenhänge sich hierbei einfacher und übersichtlicher darstellen lassen.

Fig. 6a zeigt die Amplitude A(f) und Fig. 6b die Phase $\Delta\phi(f)$ des Empfangssignals E. Die beiden Kurven ergeben sich aus der phasen- und amplitudengetreuen Überlagerung der drei zuvor beschriebenen Komponenten des Empfangssignals E.

$$Ee^{i\Delta\phi} = A_M e^{i\Delta\phi M} + A_{mech} e^{i\Delta\phi mech} + A_{el} e^{i\Delta\phi el}$$

Beide Kurven weisen jeweils vier Bereiche I, II, III, IV auf, die nachfolgend stark vereinfacht beschrieben sind. In einem ersten Bereich I ist das erste zusätzliche Signal dominant, da es die größte Amplitude $A_{mech}$ aufweist. Die Phase $\Delta\phi_{mech}$ dieses Signals unterscheidet sich von den Phasen $\Delta\phi_M(f)$ und $\Delta\phi_{el}$ um etwa 180°. Die resultierende Amplitude A(f) entspricht somit in etwa der um die Summe der Amplituden $A_M(f)$ und $A_{el}$ reduzierten Amplitude $A_{mech}(f)$.

$$A(f) \cong A_{mech}(f) - (A_M(f) + A_{el})$$

Die resultierende Phase $\Delta\phi(f)$ beträgt in diesem Bereich I 180°.

In einem zweiten Bereich II übernimmt das Meßsignal $E_M$ aufgrund dessen ansteigender und die Amplitude $A_{mech}$ des ersten zusätzlichen Signals übersteigender Amplitude $A_M(f)$ die Führung. Dessen Phase $\Delta\phi_M(f)$ beträgt in diesem Bereich II 0°. Die Amplitude A des resultierenden Signals entspricht somit in etwa der um die Amplitude $A_{mech}$ des ersten zusätzlichen Signals reduzierten Summe der Amplituden des Meßsignals $A_M(f)$ und des zweiten zusätzlichen Signals $A_{el}(f)$.

$$A(f) \cong A_M(f) + A_{el} - A_{mech}$$

Vor der Bereichsgrenze zwischen Bereich I und Bereich II fällt die Amplitude A(f) des Empfangssignals E deutlich ab. In diesem Frequenzbereich fällt die Phase $\Delta\phi(f)$ des Empfangssignals E von 180° auf 0° ab. Im Bereich II steigt die Amplitude A und die Phase $\Delta\phi(f)$ beträgt unverändert 0°. Zwischen dem Bereich II und einem Bereich III liegt die Resonanzfrequenz $f_r$. Entsprechend weist das Meßsignal $E_M$ einen Phasensprung von 180° auf. Aufgrund dessen nun absteigender, die Amplitude $A_{mech}$ des ersten zusätzlichen Signals $E_{mech}$ jedoch immer noch übersteigenden Amplitude $A_M(f)$ ist dieses Signal auch im Bereich III dominant. Die Amplitude A des Empfangssignals entspricht im Bereich III somit im wesentlichen der um die Amplitude $A_{el}(f)$ des zweiten zusätzlichen Signals reduzierten Summe der Amplituden $A_M(f)$ des Meßsignals und des ersten zusätzlichen Signals $A_{mech}(f)$.

$$A(f) \cong A_M(f) + A_{mech} - A_{el}$$

Sie nimmt entsprechend der Abnahme der Amplitude des Meßsignals $A_M(f)$ mit der Frequenz ab. Die Phase beträgt in diesem Bereich III 180°.

In einem Bereich IV fällt die Amplitude des Meßsignals $A_M(f)$ unter die Amplitude des ersten zusätzlichen Signals $A_{mech}$ ab. In diesem Bereich IV fällt die Amplitude A des Empfangssignals E asymptotisch auf einen Endwert ab, der der Differenz der Amplituden $A_{mech}$ und $A_{el}$ der beiden zusätzlichen Signale entspricht.

$$A(f) \cong A_{mech} - A_{el}$$

Die Phase $\Delta\phi(f)$ verbleibt bei einem Wert von 180°.

Die Phasendifferenz zwischen dem elektrischen Sendesignal und dem elektrischen Empfangssignal E weist in Abhängigkeit von der Frequenz zwei einander entgegengerichtete Phasensprünge von jeweils 180° auf. Es gibt folglich zwei Frequenzen, bei denen die Phase $\Delta\phi(f)$ den eingangs beschriebenen festen der Resonanz entsprechenden Wert $\Delta\phi_R$, hier 90°, aufweist, nämlich an der Bereichsgrenze zwischen dem Bereich I und dem Bereich II und an der Bereichsgrenze zwischen dem Bereich II und dem Bereich III. Die erste Frequenz, die nachfolgend als Antiresonanzfrequenz $f_{ar}$ bezeichnet ist, ist unerheblich, da hier die Amplitude des elektrischen Empfangssignals E vernachlässigbar gering ist. Das frequenzbestimmende Glied des Regelkreises ist somit unwirksam. Dadurch ist die Rückkopplung unterbrochen und die Selbsterregungsbedingung kann nicht erfüllt werden. Die zweite Frequenz ist die Resonanzfrequenz $f_r$ des Systems. Sie ist die maßgebliche Frequenz beim Betrieb der Vorrichtung und wird durch den Regelkreis automatisch eingestellt.

Selbstverständlich sind die Werte der Phasen $\Delta\phi$, $\Delta\phi_{mech}$, $\Delta\phi_{el}$ der einzelnen Signale $E_M$, $E_{mech}$, $E_{el}$ für unterschiedliche Vorrichtungen verschieden, deren prinzipieller Verlauf gilt jedoch für alle erwähnten Vorrichtungen und ist anhand der Beschreibung des Ausführungsbeispiels nachvollziehbar.

Tritt nun der Fall ein, daß das mechanische Schwingungsgebilde gedämpft ist oder eine reduzierte Schwingungsgüte aufweist, so zeigen Amplitude $A_M(f)$ und Phase $\Delta\phi_M(f)$ des Meßsignals den in den Figuren 3a und 3b gestrichelt dargestellten Verlauf. Die Amplitude $A_M(f)$ steigt und sinkt erheblich langsamer mit der Frequenz und weist einen deutlich geringeren Maximalwert auf. Die Phase $\Delta\phi_M(f)$ zeigt keinen Phasensprung, sondern steigt kontinuierlich mit der Frequenz. Je größer die Reduktion der Schwingungsgüte des Systems ist, um so geringer ist der Maximalwert der Amplitude und um so geringer ist die Steigung der Phase. Die Phase $\Delta\phi_M(f)$ erreicht asymptotisch jedoch immer die Werte 0° und 180° und bei der Resonanzfrequenz beträgt sie nach wie vor 90°. Die zusätzlichen Signale $E_{mech}$ und $E_{el}$ bleiben unverändert.

Amplitude A(f) und Phase $\Delta\varphi(f)$ des sich aus der amplituden- und phasengetreuen Überlagerung der drei Komponenten ergebenden Empfangssignal E unterscheiden sich deutlich von dem erstgenannten Beispiel, bei dem keine Reduktion der Schwingungsgüte vorlag. Die Maxima der Amplitude A(f) sind sehr viel weniger ausgeprägt und die Phase $\Delta\varphi(f)$ weist anstelle der beiden einander entgegengesetzten Phasensprünge von jeweils 180° zwei einander entgegengerichtete kontinuierliche Phasenänderungen auf. Der maximale Phasenunterschied ist deutlich geringer als 180°. Abhängig von der Schwingungsgüte des Systems ist er sogar geringer als 90°.

Tritt also eine Dämpfung des mechanischen Schwingungsgebildes, z.B. in Schaum oder in einem viskosen Medium, oder eine anders geartete Reduktion der Schwingungsgüte des Systems, z.B. bedingt durch eine Lockerung der mechanischen Verbindung zwischen den als Sender 23 bzw. als Empfänger 24 arbeitenden piezoelektrischen Elementen und dem mechanischen Schwingungsgebilde auf, so weist die Phasendifferenz zwischen dem elektrischen Sendesignal und dem elektrischen Empfangssignal E in Abhängigkeit von der Frequenz zwar noch zwei einander entgegengerichtete kontinuierliche Phasenänderungen auf, der maximale Phasenunterschied kann jedoch sehr gering sein. Die maximale Phasendifferenz ist um so geringer, je geringer der Abstand zwischen der Resonanzfrequenz $f_r$ und der Antiresonanzfrequenz $f_{ar}$ ist.

Durch den Regelkreis, der das mechanische Schwingungssystem zu Schwingungen mit der Resonanzfrequenz $f_r$ erregt, wird eine feste, der Resonanz entsprechende Phasenbeziehung zwischen dem Sendesignal und dem Empfangssignal E hergestellt. Damit die beschriebene Vorrichtung im unbedeckten Zustand bei hoher Schwingungsgüte funktionstüchtig ist, beträgt die feste Phasendifferenz $\Delta\phi_R$ bei dem hier gezeigten Ausführungsbeispiel 90°. Sie wird in dem gezeigten Ausführungsbeispiel durch den Phasenschieber 8 hergestellt.

Tritt nun aufgrund der Eigenschaften des Füllgutes oder aufgrund einer Reduktion der Schwingungsgüte der vorbeschriebene Fall ein, daß die Phase $\Delta\varphi(f)$ des Empfangssignal diesen festen Wert $\Delta\phi_R$ über den gesamten Frequenzbereich nicht mehr annimmt, so ist eine zuverlässige Anregung des mechanischen Schwingungssystems nicht mehr möglich. Die Vorrichtung ist folglich nicht funktionsfähig.

Erfindungsgemäß wird dieses Problem gelöst, indem die Sendesignalleitung 5 mit der Empfangssignalleitung 6 über eine elektrische Impedanz Z verbunden ist. Dies stellt eine zusätzliche elektrische Kopplung dar. Diese Verbindung ist elektrisch parallel zu dem aus dem Verstärker 7 und dem Phasenschieber 8 bestehenden Abschnitt des Regelkreis angeordnet. Die Impedanz Z ist z.B. ein ohmscher Widerstand, eine Kapazität, eine Induktivität oder eine Kombination der genannten Bauteile.

Die Impedanz Z wirkt sich sowohl auf die Amplitude $A_{el}$ als auch auf die Phase $\Delta\phi_{e1}$ des zweiten zusätzlichen Signals aus. Sie ist so zu dimensionieren, daß dessen Amplitude $A_{el}$ möglichst gleich der Amplitude $A_{mech}$ des ersten zusätzlichen Signals ist und daß dessen Phase $\Delta\phi_{el}$ gegenüber der Phase $\Delta\phi_{mech}$ um 180° verschoben ist. Untersuchungen haben gezeigt, daß es in den meisten Fällen genügt eine Kondensator mit entsprechender Kapazität, z. B. eine Kapazität von einigen pico-Farad einzusetzen. Der Wert der Kapazität ist entweder über Modellrechnungen vorab zu bestimmen oder durch eine mit einem abstimmbaren Kondensator auszuführende Meßreihe zu ermitteln.

Weisen die beiden zusätzlichen Signale $E_{mech}$ und $E_{el}$ nahezu die gleiche Phase auf, so sind entweder die Anschlüsse der Elektroden des Empfängers 24 zu vertauschen oder die Polarisation desselben ist um 180° zu drehen. Letzteres ist z.B. durch das Umdrehen des piezoelektrischen Elements erreichbar. Damit weisen die beiden zusätzlichen Signale die gewünschte entgegengesetzte, d.h. um 180° zueinander versetzte, Phase auf. Das gleiche Ergebnis wird selbstverständlich erzielt, indem die Sender 23 entsprechend manipuliert werden.

In Fig. 5a ist die Amplitude $A_{el}$ und in Fig. 5b die Phase $\Delta\phi_{el}$ des zweiten zusätzlichen Signals $E_{el}$ in Abhängigkeit von der Frequenz f für den Fall, daß die Sendesignalleitung 5 und die Empfangssignalleitung 6 über eine entsprechend dimensionierten Impedanz Z miteinander verbunden sind, als gestrichelte Linie eingezeichnet.

Bei dem vorbeschriebenen Stand der Technik sind die Amplituden $A_{mech}$ und $A_{el}$ der beiden zusätzlichen Signale stark verschieden. Das Signal mit der größeren Amplitude ist folglich in weiten Frequenzbereichen dominant. Bei der erfindungsgemäßen Vorrichtung sind dagegen die Amplituden $A_{mech}$, und $A_{el}$ vorzugsweise nahezu gleich und deren Phasen $\Delta\phi_{mech}$ und $\Delta\phi_{el}$ vorzugsweise nahezu entgegengesetzt. In das Empfangssignal geht maßgeblich die amplituden- und phasengetreue Summe $A_{mech}\, e^{i\Lambda\phi mech} + A_{el}e^{i.\backslash\phi el}$ ein. Weisen die beiden zusätzlichen Signale eine entgegengesetzte Phase auf, geht folglich eine Differenz $A^* - A_{mech} - A_{el}$ der Amplituden $A_{mech}$, $A_{el}$ der beiden Signale ein. Diese weist einen im Vergleich zu den einzelnen Amplituden $A_{mech}$ und $A_{el}$ der zusätzlichen Signale $E_{mech}$, $E_{el}$ sehr geringen Wert auf. In Fig. 3a ist der Wert von $A^*$ eingezeichnet.

Unter der Voraussetzung, daß die Amplitude $A_{mech}$ des ersten zusätzlichen Signals auch hier geringfügig größer ist als die Amplitude des zweiten zusätzlichen Signals, ist für die Frequenzen, bei denen die nun maßgeblich Differenz $A^*$ ihrem Betrag nach größer als die Amplitude $A_M(f)$ des Meßsignals ist, die Phase $\Delta\phi_{mech}$ des ersten zusätzlichen Signals maßgeblich.

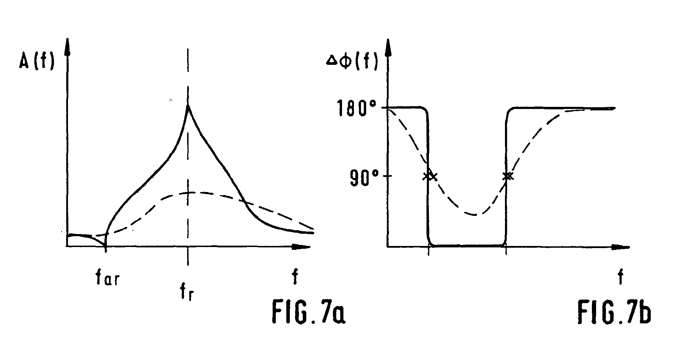

Die Amplitude A(f) und die Phase $\Delta\varphi(f)$ des resultierenden Empfangssignals E sind in den Figuren 7a und 7b dargestellt. Danach nimmt die Amplitude A(f) asymptotisch den Wert $A^*$ an. Sie weist ein Minimum bei einer Antireso-

nanzfrequenz $f_{ar}$ und ein Maximum bei der Resonanzfrequenz $f_r$ auf. Im Vergleich zu dem in Fig. 6a dargestellten Verlauf ist das Minimum sehr viel weniger ausgeprägt und die Differenz zwischen Resonanz- und Antiresonanzfrequenz ist deutlich größer. Wie die gestrichelte Linie zeigt, ist dies auch dann noch der Fall, wenn das Maximum der Amplitude $A_M(f)$ des Meßsignals durch eine Dämpfung oder eine Reduktion der Schwingungsgüte deutlich reduziert ist.

Für den idealen Fall, daß sich die beiden zusätzlichen Signale exakt kompensieren, hat A* den Wert null und die Amplitude A(f) des Empfangssignals E ist identisch mit der Amplitude $A_M(f)$ des Meßsignals.

Die Phase $\Delta\varphi(f)$ des Empfangssignals weist prinzipiell den gleichen Verlauf in Abhängigkeit von der Frequenz auf, wie in dem Beispiel von Fig. 6b. Die Antiresonanzfrequenz $f_{ar}$, bei der der erste Phasensprung auftritt ist in dem in Fig. 7b dargestellten Fall deutlich geringer als bei dem in Fig. 6b dargestellten Fall. Der Frequenzbereich, indem die Phase $\Delta\varphi(f)$ den Wert 0° aufweist ist entsprechend breiter. Der Wert der Frequenz, bei der der zweite Phasensprung auftritt ist in beiden Figuren gleich und entspricht der Resonanzfrequenz $f_r$.

Die gestrichelte Linie gibt den Verlauf der Phase $\Delta\varphi(f)$ an für den Fall, daß eine Dämpfung oder eine Reduktion der Schwingungsgüte vorliegt. Danach weist die Phasendifferenz zwischen dem elektrischen Sendesignal und dem elektrischen Empfangssignal E in Abhängigkeit von der Frequenz zwar keine Phasensprünge auf, sie weist jedoch zwei einander entgegengerichtete kontinuierliche Phasenänderungen auf. Der maximale Phasenunterschied kann zwar geringer als 180° sein, eine maximale Phasendifferenz von mindestens 90° ist jedoch auch bei sehr starker Dämpfung oder Reduktion der Schwingungsgüte des Systems noch sichergestellt.

Auch hier gilt für den Idealfall, daß sich die beiden zusätzlichen Signale exakt kompensieren, also A* den Wert null annimmt, daß die Phase $\Delta\varphi(f)$ des Empfangssignals E identisch mit der Phase $\Delta\phi_M(f)$ des Meßsignals ist.

Unabhängig von deren Schwingungsgüte weist das Empfangssignal E einer erfindungsgemäßen Vorrichtung bei der Resonanzfrequenz des mechanischen Schwingungsgebildes immer die gleiche feste Phasendifferenz $\Delta\phi_R$ auf.

## Patentansprüche

1. Vorrichtung zur Feststellung und/oder Überwachung eines vorbestimmten Füllstandes in einem Behälter, welche Vorrichtung umfaßt :

   - ein auf der Höhe des vorbestimmten Füllstandes angebrachtes mechanisches Schwingungsgebilde (1),
   - einen elektromechanischen Wandler (2),

     -- der mindestens einen Sender (23) aufweist,

       --- an dem ein elektrisches Sendesignal anliegt und
       --- der das mechanische Schwingungsgebilde (1) zu Schwingungen anregt, und

     -- der einen Empfänger (24) aufweist,

       --- der die mechanischen Schwingungen des Schwingungsbildes (1) aufnimmt und in ein elektrisches Empfangssignal (E) umwandelt,

   - eine Auswerteeinheit (9),

     - - die das Empfangssignal (E) aufnimmt und dessen Frequenz bestimmt, diese mit einer Referenzfrequenz ($f_R$) vergleicht und ein Ausgangssignal erzeugt das angibt, daß das mechanische Schwingungsgebilde (1) von einem Füllgut bedeckt ist, wenn die Frequenz einen Wert aufweist der kleiner als die Referenzfrequenz ($f_R$) ist, und daß es nicht bedeckt ist, wenn der Wert größer ist, und

   - einen Regelkreis, der eine zwischen dem elektrischen Sendesignal und dem elektrischen Empfangssignal (E) bestehende Phasendifferenz auf einen bestimmten konstanten Wert ($\Delta\phi_R$) regelt, bei dem das Schwingungsgebilde (1) Schwingungen mit einer Resonanzfrequenz ($f_r$) ausführt und der einen Abschnitt mit einem Verstärker (7) und einem Phasenschieber (8) aufweist,

   **dadurch gekennzeichnet, daß**

   - eine das Empfangssignal (E) übertragende Empfangssignalleitung (6) mit einer das Sendesignal übertragenden Sendesignalleitung (5) über eine elektrische Impedanz (Z) verbunden ist, welche elektrisch parallel zu dem den Verstärker (7) und den Phasenschieber (8) aufweisenden Abschnitt des Regelkreises angeordnet ist,

- wobei das Empfangssignal
(E) drei Komponenten aufweist, nämlich

- - ein Meßsignal, das durch die Schwingung des mechanischen Schwingungsgebildes bedingt ist,
- - ein erstes zusätzliches Signal, das durch eine elektrische Kopplung zwischen dem Sender(23) und dem Empfänger (24) bedingt ist, und
-- ein zweites zusätzliches Signal, das durch eine mechanische Kopplung zwischen dem Sender (23) und dem Empfänger (24) bedingt ist, und

- wobei die Impedanz (Z) so bestimmt ist, daß das erste und das zweite zusätzliche Signal nahezu gleich große Amplituden ($A_{el}$, $A_{mech}$) aufweisen und nahezu gegenphasig verlaufen.

2. Vorrichtung nach Anspruch 1, bei der die Sender (23) und der Empfänger (24) piezoelektrische Elemente sind.

3. Vorrichtung nach Anspruch 1, bei der die Phasendifferenz zwischen dem Sendesignal und dem Empfangssignal (E) Werte zwischen 20° und 90° oder zwischen -90° und -20° bezogen auf einen Bezugswert annimmt.

4. Vorrichtung nach Anspruch 1, bei der die Impedanz (Z) eine Kapazität ist.

5. Vorrichtung nach Anspruch 1, bei der die Impedanz (Z) ein Widerstand, eine Induktivität oder eine Kombination aus mindestens einem Widerstand und/oder mindestens einer Induktivität und/oder mindestens einer Kapazität ist.

**Claims**

1. A device for detecting and/or monitoring a predetermined filling level in a container, which device comprises:

- a mechanical vibratory structure (1) mounted at the height of the predetermined level,
- an electromechanical transducer (2)

- - which has at least one transmitter (23)

-- - to which an electrical transmission signal is applied and

- - - which sets the mechanical vibratory structure (1) into vibration, and

- - which has a receiver (24)

- - - which picks up the mechanical vibrations of the vibratory structure (1) and converts them into an electrical reception signal (E),

- an evaluation unit (9)

- - which picks up the reception signal (E) and determines its frequency, compares this frequency with a reference frequency ($f_R$) and generates an output signal which indicates that the mechanical vibratory structure (1) is covered by a filling medium if the frequency has a value which is less than the reference frequency ($f_R$) and that it is not covered if the value is greater, and

- a control circuit which adjusts a phase difference existing between the electrical transmission signal and the electrical reception signal (E) to a specified constant value ($\Delta\phi R$) at which the vibratory structure (1) vibrates at a resonance frequency ($f_r$), and which has a portion with an amplifier (7) and a phase shifter (8),

**characterised in that**

- a reception-signal line (6), which transmits the reception signal (E), is connected to a transmission-signal line (5), which transmits the transmission signal, via an electrical impedance (Z) which is arranged electrically in parallel with that portion of the control circuit which has the amplifier (7) and the phase shifter (8),
- wherein the reception signal (E) has three components, namely

- - a measuring signal which is induced by the vibration of the mechanical vibratory structure,
- a first additional signal which is induced by an electrical coupling between the transmitter (23) and the receiver (24) and
- - a second additional signal which is induced by a mechanical coupling between the transmitter (23) and the receiver (24), and

- wherein the impedance (Z) is determined so that the first and second additional signals have virtually equal amplitudes ($A_{el}$, $A_{mech}$) and are virtually in phase opposition.

2. A device according to claim 1, wherein the transmitters (23) and the receiver (24) are piezoelectric elements.

3. A device according to claim 1, wherein the phase difference between the transmission signal and the reception signal (E) assumes values between 20° and 90° or between -90° and -20° relative to a reference value.

4. A device according to claim 1, wherein the impedance (Z) is a capacitor.

5. A device according to claim 1, wherein the impedance (Z) is a resistor, an inductor or a combination of at least one resistor and/or at least one inductor and/or at least one capacitor.

**Revendications**

1. Dispositif destiné à la détermination et/ou la surveillance d'un niveau prédéfini au sein d'un réservoir, lequel dispositif comprend :

- un système vibrant mécanique (1) installé à la hauteur du niveau prédéfini,
- un convertisseur électromécanique (2),

-- qui comporte au minimum un émetteur (23),

--- auquel est appliqué un signal d'émission électrique et
--- qui excite le système vibrant mécanique (1) en vibrations, et

-- qui comporte un récepteur (24),

--- qui reçoit les vibrations mécaniques du système vibrant (1) et les convertit en un signal de réception électrique (E),

- une unité d'exploitation (9),

-- qui reçoit le signal de réception (E) et détermine sa fréquence, la compare avec une fréquence de référence ($f_R$) et génère un signal de sortie qui indique que le système vibrant mécanique (1) est recouvert de produit lorsque la fréquence présente une valeur inférieure ou égale à la fréquence de référence ($f_R$), et qu'il n'est pas recouvert de produit lorsque la valeur est supérieure, et

- un circuit de régulation, qui régule un déphasage existant entre le signal d'émission électrique et le signal de réception électrique (E) à une valeur constante déterminée ($\Delta\phi_R$), à laquelle le système vibrant (1) exécute des vibrations à une fréquence de résonance ($f_r$), et circuit qui présente une section comprenant un amplificateur (7) et un déphaseur (8),

**caractérisé en ce**

- **qu'**une ligne de signal de réception (6) transmettant le signal de réception (E) est reliée avec une ligne de signal d'émission (5) transmettant le signal d'émission par l'intermédiaire d'une impédance (Z),qui est disposée parallèlement à la section du circuit de régulation comportant l'amplificateur (7) et le déphaseur (8),
- le signal de réception (E) étant constitué de trois composantes, notamment

-- un signal de mesure, qui est dû à la vibration du système vibrant mécanique (1),

-- un premier signal supplémentaire, qui est dû au couplage électrique entre l'émetteur (23) et le récepteur (24), et

-- un deuxième signal supplémentaire, qui est dû au couplage mécanique entre l'émetteur et le récepteur, et

- l'impédance (Z) est déterminée de telle manière que le premier et le deuxième signal supplémentaire présentent des amplitudes ($A_{él}$, $A_{méca}$) pratiquement égales et pratiquement en opposition de phase.

2. Dispositif selon la revendication 1, pour lequel les émetteurs (23) et le récepteur (24) sont des éléments piézoélectriques.

3. Dispositif selon la revendication 1, pour lequel le déphasage entre le signal d'émission et le signal de réception (E) prend des valeurs comprises entre 20° et 90° ou entre -90° et -20°, par rapport à une valeur de référence.

4. Dispositif selon la revendication 1, pour lequel l'impédance (Z) est une capacité.

5. Dispositif selon la revendication 1, pour lequel l'impédance (Z) est une résistance, une inductance ou une combinaison d'au moins une résistance et/ou d'au moins une inductance et/ou d'au moins une capacité.

FIG. 1

FIG.2

14

FIG.3a

FIG.3b

FIG.4a

FIG.4b

FIG.5a

FIG.5b

FIG.6a

FIG.6b

15

FIG.7a

FIG.7b

## EP 0 875 742 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4419617 A